# EUROPEAN PATENT SPECIFICATION

(11) **EP 1 490 661 B1**
(45) Date of publication and mention of the grant of the patent: **09.05.2007**
(21) Application number: 02714410.4
(22) Date of filing: 27.03.2002
(51) Int. Cl.: G01K 11/18, G01K 11/32

(54) **INTENSITY MODULATED FIBER OPTIC TEMPERATURE SWITCHING IMMERSION PROBE**
SCHALTENDE INTENSITÄTSMODULIERTE FASEROPTISCHE EINTAUCHTEMPERATURMESSSONDE
SONDE A IMMERSION AVEC FIBRES OPTIQUES, A MODULATION D'INTENSITE, PRESENTANT UNE FONCTION DE CORRECTION DE TEMPERATURE

(43) Date of publication of application: 29.12.2004
(73) Proprietor: COUNCIL OF SCIENTIFIC AND INDUSTRIAL RESEARCH, New Delhi 100 001 (IN)
(72) Inventor: Singh, Nahar, 160 020 Chandigarh (IN); Jain, Subhash Chander, 160 020 Chandigarh (IN); Aggarwal, Anil Kumar, 160 020 Chandigarh (IN)
(74) Representative: Walsh, David Patrick
(86) International application number: PCT/IN2002/000075
(87) International publication number: WO 2003/081193

(56) References cited:
- EP-A- 0 146 522
- WO-A-87/05103
- US-A- 4 307 607
- PATENT ABSTRACTS OF JAPAN vol. 005, no. 191 (P-092), 5 December 1981 (1981-12-05) -& JP 56 115930 A (MITSUBISHI ELECTRIC CORP), 11 September 1981 (1981-09-11)

## Description

### FIELD OF INVENTION

The present Invention relates to an intensity modulated fiber temperature optic switching immersion probe for remote temperature monitoring and switching of an industrial process. The present invention also provides a method for remote sensing of temperature.

### BACKGROUND OF THE INVENTION

Conventionally, thermometers, thermocouples and pyrometers are used to measure and control the temperature, but they are not immune to hostile, corrosive and electro-magnetically noisy environment The novelty about this probe is the use of optical fibers in conjunction with a cell containing a chemical and resulting in a change of light level at its melting point. This arrangement overcomes the above mentioned problems effectively and provides the added advantage of remote monitoring. The cell is opaque to light at room temperature but becomes transparent at a given higher temperature enabling actuation of a relay to stop the heating process or raise an alarm. There is no electric-signal being guided in this probe. It is only the light signal which is guided through optical fibers and is unaffected by the presence of electrical signals.

WO 87/05103 teaches a temperature switching optic immersion probe. EP-A-0146522 provides a reflecting surface in the measuring cell of a probe to assist transmission. US 5,754,722 provides a "Y-like" shape fiber-optic probe and also includes a reflecting surface at its head.

### OBJECTS OF THE INVENTION

The main object of the present invention is to provide a reliable, durable, cost-effective and in-situ temperature switching fiber optic immersion probe, which overcomes most of the drawbacks present in conventional temperature probes as detailed above.
Another object of the present invention is to provide a method for remote sensing of temperature using this immersion probe.
Further object of the present invention is to provide an immersion probe for remote sensing temperature having a chemical that is non-toxic, non-inductive, non-conductive and non-corrosive.
Yet another object of the present invention is to provide an immersion probe for remote sensing of temperature in harsh working conditions.

### SUMMARY OF THE INVENTION

The present invention relates to an intensity modulated fiber optic temperature switching immersion probe for remote temperature monitoring and switching of an industrial process. The present invention also provides a method for remote sensing of temperature.
The present invention adopts a method wherein the melting of point of the chemical substance determines the switching mode for the device.

### DETAILED DESCRIPTION OF THE INVENTION

Accordingly, the present invention provides an intensity modulated fiber optic temperature switching immersion probe for remote sensing of temperature as defined in claim 1.
Preferably, the cell has an aluminum coating on the outside of the bottom surface forming a concave mirror.
Preferably, the cell is covered with a glass plate (5) on the upper side.
Preferably, the cell is further bonded and coupled to the metal sleeve by means of a metallic ring (7).
Preferably, a power meter is used for the processing of electrical signal.

Yet another embodiment of the present invention, wherein the optical fiber is made of dielectric material that is non-corrosive, durable and immune to any Electro Magnetic interference (EMI) and RFI.

Yet another embodiment of the present invention, wherein the detector arm that is coupled to a photo-detector is connected to signal processing electronic circuitry and an output display.

Still another embodiment of the present invention, wherein the chemical used undergoes phase transformation from solid to a liquid phase at its melting point.

Yet another embodiment of the present invention, wherein the chemical is selected from oxalic acid, sodium chloride, paraffin wax and preferably acetamide.

Further embodiment of the present invention, wherein the chemical is non-toxic, non-corrosive and non-inflammable.

Still another embodiment of the present invention, wherein in solid state the chemical is opaque to light and emits a fixed value of optical output and with the increased temperature the chemical melts and becomes transparent thus generating an increased optical output.

Yet another embodiment of the present invention, wherein the phase transformation at the melting point of the chemical increases the optical output that is used as a detector signal for actuation of alarm or relay.

As claimed the length of the cell is twice the focal length of the concave mirror.

Still another embodiment of the present invention, wherein the optical signal propagation is secure and without any cross talk or interference problems.

Yet another embodiment of the present invention, wherein the optical signal is unaffected by the presence of electrical signals.

Still another embodiment of the present invention, wherein the said probe is used for remote sensing of temperature upto a distance of 1 km.

Further embodiment of the present invention, wherein the said probe at an increased temperature provides an increase of 6 times in the output signal over the signal at the room temperature.

Yet another embodiment of the present invention, wherein said optical probe operates at the melting temperature of the chemical that is in the range of 75-85° C.

Further embodiment of the present invention, wherein said optical probe is used in monitoring temperature in hostile, inflammable, corrosive and electro-magnetically noisy environments, preferably in petrochemical industries and power plants.

The present invention also provides a method of sensing temperature through intensity modulation of light signal using a device as claimed in claim 1, said method comprising the steps of claim 16.

An embodiment of the present invention, a method wherein the liquid is selected from the group consisting of water, acetone, carbon tetrachloride and transformer oil.
Another embodiment of the present invention, a method wherein the chemical is selected from oxalic acid, sodium chloride, paraffin wax and preferably acetamide.
Still another embodiment of the present invention, a method wherein the chemical having a melting point in the range of 75-85° C.
Yet another embodiment of the present invention, a method wherein the optical signal propagation is secure and without any cross talk or interference problems.
Still another embodiment of the present invention, a method wherein the optical signal is unaffected by the presence of electrical signals.
Yet another embodiment of the present invention, a method wherein the said probe is used for remote sensing up to a distance of 1 km.
Still another embodiment of the present invention, a method wherein the said probe at an increased temperature provides an increase of 6 times in the output signal over the signal at the room temperature.
Yet another embodiment of the present invention, a method wherein the chemical substance that is opaque at room temperature becomes transparent at a given higher temperature enabling actuation of a relay to stop the heating process or raise an alarm.
The invention is further explained in the form of the following embodiments.

In the present invention a fiber optic temperature switching probe, which comprises a fiber optic Y-shaped light guide and a small cell containing a special chemical/which undergoes solid to liquid phase transformation at its melting point. The cell has a concave mirror on its lower side and a glass plate on the upper side. The chemical identified and experimented for this probe undergoes phase change at a temperature of 78-79° C. A small amount of the chemical is first transferred into cell and then it is evacuated and properly sealed. The cell is further bonded to a metal tube, which fits tightly on to the common end cap of the Y-guide. A metallic ring is used for coupling the cell to the metal tube. The Y-guide has two arms, termed as a source arm and the detector arm. A white light source is coupled to the source arm while the detector arm is aligned to a PIN photo-detector. The electrical signal is processed and displayed by a powermeter.

In an embodiment of the present invention a suitable chemical has been identified and used to realize the cell for the temperature switching probe. Depending on the identification of a suitable chemical e.g. non-corrosive, non-inflammable, switch probes for different temperatures can be realized.

In another embodiment of the present invention, fiber optic light guides have been employed which are made of optical glass, a highly durable material being non-conductive and non-inductive in nature.

The sensing signal is in the form of intensity modulated light guided by the fiber. The signal propagation is secure without any cross talk or interference problems.

The optical fiber temperature switch probe comprises of an indigenously produced Y-shaped optical fiber light guide/bundle encased in a crush-resistant metallic sleeve with its ends properly terminated into metallic end caps. A few grams of the commercially available chemical in grainy form is first vacuum dried under clean conditions and then transferred into the cell made from a thin-walled glass test tube. The curved surface at the bottom of the test tube is given a reflective aluminum coating on the outside as to realize a concave mirror while the upper end is covered with a plane glass disc. Considering the image formation characteristics, the length of the cell is chosen to be twice the focal length of the concave mirror. Proper adhesive sealing is done to make the cell airtight.

With the help of a metallic ring, the cell is firmly coupled onto the common end cap of the Y-guide and in this situation, the common end rests on to the top glass cover of the cell.

When the probe is immersed in a liquid container at a temperature below the melting point of the chemical, there is a fixed value of the detector signal. The chemical begins to melt as the temperature reaches around 78-79°C and thus more light reaches the detector resulting in an increased output signal. This continues till the chemical has melted completely and the detector signal has attained a maximum value which takes place at about 83 °C. The probe provides typically 6 times increase in the output signal as compared to the room temperature stage. At any particular value of temperature in this range (75-85°C) corresponding to the level of optical signal available, either an alarm signal could be generated or the process can be shut down automatically as to stop further heating of the liquid/solvent. Thus the probe can be used as a temperature switch e.g. to stop the process from further heating at any value of temperature in this range.

The probe facilitates sensing of temperature through intensity modulation of light signal. This modulation process is unaffected by a hostile and electrically noisy environment whereas the prior art has to be either properly shielded for gaining this immunity or protection. This is so because optical fibers are made from dielectric materials and therefore, they are both non-inductive and non-conductive in nature thereby bringing immunity to EMI/RFI. Also the basic raw material, optical glass from which fibers are made is quite durable and effectively withstands harsh and corrosive environments encountered in various application areas.
When the probe end is dipped into a liquid whose temperature is to be monitored, the optical signal reaching the detector depends on the transparency to light provided by the cell medium. As the temperature rises, the chemical starts melting beyond a point and transparency to light goes up rapidly thus increasing the detector signal. At a stage, the signal reaches its maximum value when the entire chemical has melted. This level of the signal can be used to raise an alarm or actuate a relay/switch to shut down or start a process at that maximum value of temperature thus working as a temperature switch probe.
This temperature switch probe has been experimented in the laboratory by dipping it in water and other solvents such as acetone, carbon tetrachloride, transformer oil etc to monitor their temperature. The temperature of water and other liquids is recorded with a mercury thermometer. There has been consistency and repeatability in the optical output with temperature within 1°C.
This probe could be beneficially used for starting/closing of a process in an industry. The process monitoring can be carried out remotely by extending the length of optical fiber arms of the bundle. It can be quite a durable and cost-effective device and the process monitoring operation can be made automatic.
A comparison between the present probe and the conventional temperature measuring techniques/ probes is given below:

**COMPARISON CHART**

| S.No | THERMOMETER | THERMOCOUPLE | PYROMETER | FIBER OPTIC PROBE |
|---|---|---|---|---|
| 1. | No point switching | No point switching | No point switching | Point switching |
| 2. | Immunity to EMI/ RFI and hostile / corrosive environments | Not immune to EMI/ RFI and hostile / corrosive environments | Not immune to EMI/ RFI and hostile / corrosive environments | Immunity to EMI/ RFI and hostile / corrosive environments |
| 3. | No remote sensing | No remote sensing | Remote sensing (few 10s of meters) | Remote sensing (upto a Km) |

### ADVANTAGES

1. It can work for process industry applications where the environment is hostile and electrically noisy.
2. It can monitor the temperature remotely and the process can be made automatic.
3. A low cost and durable device.
4. The immersion probe is a simple and useful device, which can be employed in harsh environments for in-situ temperature switching applications from a remote location.

The drawings provided in the enclosed sheets indicate the configuration of the fiber optic temperature switching immersion probe. It basically comprises of a Y-shaped fiber optic bundle and a small cell made of a thin-walled glass test tube containing a chemical. The bottom surface of the test tube has been given a protective reflective aluminum coating on the outside for realizing as a concave mirror. The Y-shaped fiber optic bundle contains two arms: the source arm and the detector arm. A white light source is coupled to source arm employing suitable optics while the other arm is aligned to a PIN photo-detector.

The various parts of the probe have been labeled as under:
1. End Cap for Coupling to the Light Source
2. Source Arm
3. Y-Coupler
4. Common End Cap of the Fiber Bundle
5. Reflective Coating on Outside of the Bottom Surface of the Thin-Walled Glass Cell
6. Cell Containing the Chemical
7. Metallic Ring for Coupling Cell to the Common End Cap
8. Metallic Tube Tightly Fitting the Common End Cap
9. Common Arm
10. Detector Arm

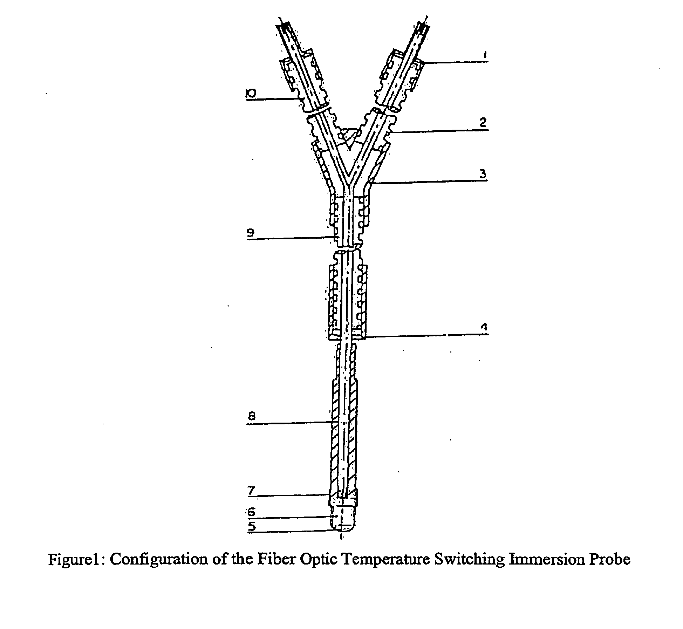

## Claims

1. An intensity modulated optic fiber temperature switching immersion probe for remote sensing of temperature, said device comprising:
(a) a Y-shaped optical fiber bundle light guide encased in a crush-resistant metallic sleeve (8) terminated with a metallic end cap (1);
(b) the Y-guide having a source arm (2), a detector arm (10), a Y-coupler (3), a common arm (9) and a common end cap (4);
(c) a white light source is coupled to the source arm;
(d) a photo-detector is aligned to the detector arm;
(e) the Y-guide fitting into the common end cap (4) of the metallic sleeve;
(f) an evacuated cell (6) comprising a bottom concave surface and containing a chemical being attached to the common end of the Y- guide as a means for sensing temperature: and
(g) **characterized in that** the bottom concave surface of the cell is provided with a reflective coating on an outside surface to form a concave mirror having a focal length equal to about half the length of the cell.

2. The device according to claim 1, wherein the optical fiber is made of dielectric material that is non-corrosive, durable and immune to any Electro Magnetic Interference (EMI) and RFI.

3. The device according to any of claims 1 or 2. wherein the detector arm that is coupled to a photo-detector is connected to signal processing electronic circuitry and an output display.

4. The device according to any preceding claim, wherein the chemical used undergoes phase transformation from solid to a liquid phase at its melting point.

5. The device according to any preceding claim, wherein the chemical is selected from oxalic acid, sodium chloride, paraffin wax and acetamide.

6. The device according to claim 1, wherein the chemical is non-toxic, non-corrosive, non-conductive and non-inductive in nature and non-inflammable.

7. The device according to any preceding claim, wherein in solid state the chemical is opaque to light and emits a fixed value of optical output and with the increased temperature the chemical melts and becomes transparent thus generating an increased optical output.

8. The device according to any preceding claim, wherein the phase transformation at the melting point of the chemical increases the optical output that is used as a detector signal for actuation of alarm or relay.

9. The device according to any preceding claim, wherein said reflective coating on the outer surface of the cell is aluminum coating.

10. The device according to any preceding claim, wherein the optical signal propagation is secure and without any cross talk or interference problems.

11. The device according to any preceding claim, wherein the optical signal is unaffected by the presence of electrical signals.

12. The device according to any preceding claim, wherein the said probe is used for remote sensing of temperature up to a distance of 1 km.

13. The device according to any preceding claim, wherein the said probe at an increased temperature provides an increase of 6 times in the output signal over the signal at the room temperature.

14. The device according to any preceding claim, wherein said optical probe operates at the melting temperature of the chemical that is in the range of 75-85 °C.

15. The device according to any preceding claim, wherein said optical probe is used in monitoring temperature in hostile, inflammable, corrosive and electro-magnetically noisy environments.

16. A method of sensing temperature through intensity modulation of light signal using a device as claimed in claim 1, said method comprising the steps of:
(a) immersing the probe in a liquid container having a temperature below the melting point of the chemical;
(b) passing the light from the white light source to the photo detector,
(c) recording a fixed value of optical signal generated by the chemical in solid state present in the evacuated cell in order to obtain a concave mirror with a focal length equal to half the focal length of the cell at the room temperature; and
(d) detecting the maximum optical signal generated by the chemical at its melting point and in liquid phase;
(e) detecting the optical signal by means of a photo-detector;
(f) signal processing by means of an electronic circuitry; and
(g) enabling actuation of a relay to stop the heating process or raise an alarm.

17. The method as claimed in claim 16, wherein passing of light from the light source to the detector comprises transmission of light through the source arm, rejection from the surface of the chemical contained in the cell and movement of the reflected optical wave through the detector arm to the detector.

18. The method according to claim 16. wherein the liquid is selected from the group consisting of water, acetone, carbon tetrachloride and transformer oil.

19. The method according to any of claim 16 or 17, wherein the chemical is selected from oxalic acid, sodium chloride, paraffin wax and acetamide.

20. The method according to any of claims 16-18, wherein the chemical has a melting point in the range of 75-85°C.

21. The method according to any of claims 16-19, wherein the optical signal propagation is secure and without any cross talk or interference problems.

22. The method according to any of claims 16-20, wherein the optical signal is unaffected by the presence of electrical signals.

23. The method according to any of claims 16-21, wherein the said probe is used for remote sensing up to a distance of 1 km.

24. The method according to any of claims 16-22 wherein the said probe at an increased temperature provides an increase of 6 times in the output signal over the signal at the room temperature.

25. The method according to any of claims 16-23, wherein the chemical substance that is opaque at room temperature becomes transparent at a given higher temperature enabling actuation of a relay to stop the heating process or raise an alarm.

## Patentansprüche

1. Intensitätsmodulierte faseroptische temperaturschaltende Tauchsonde zur Fernerfassung von Temperatur, wobei die Einrichtung folgendes umfaßt:
(a) einen Y-förmigen Faserbündellichtleiter, der in einer stauchfesten metallischen Hülse (8) eingeschlossen ist, die mit einer metallischen Endkappe (1) abgeschlossen ist;
(b) wobei der Y-Leiter einen Quellenarm (2), einen Detektorarm (10), einen Y-Koppler (3), einen gemeinsamen Arm (9) und eine gemeinsame Endkappe (4) aufweist;
(c) eine Weißlichtquelle ist an den Quellenarm gekoppelt;
(d) ein Photodetektor ist auf den Detektorarm ausgerichtet;
(e) der Y-Leiter paßt dabei in die gemeinsame Endkappe (4) der metallischen Hülse;
(f) eine evakuierte Zelle (6), die eine untere konkave Oberfläche umfaßt und eine Chemikalie enthält, ist dabei an dem gemeinsamen Ende des Y-Leiters als ein Mittel zum Erfassen von Temperatur angebracht und
(g) **dadurch gekennzeichnet, daß** die untere konkave Oberfläche der Zelle mit einer reflektierenden Beschichtung auf einer Außenseitenoberfläche versehen ist, um einen konkaven Spiegel mit einer Brennweite gleich etwa der Hälfte der Länge der Zelle auszubilden.

2. Einrichtung nach Anspruch 1, wobei die optische Faser aus einem dielektrischen Material hergestellt ist, das nicht korrosiv, dauerhaft und immun gegenüber einer etwaigen elektromagnetischen Beeinflussung (EMB) und RFI ist.

3. Einrichtung nach einem der Ansprüche 1 oder 2, wobei der Detektorarm, der an einen Photodetektor gekoppelt ist, an eine signalverarbeitende Elektronikschaltungsanordnung und an ein Ausgabedisplay angeschlossen ist.

4. Einrichtung nach einem der vorhergehenden Ansprüche, wobei die verwendete Chemikalie an ihrem Schmelzpunkt eine Phasenumwandlung von fest zu einer flüssigen Phase erfährt.

5. Einrichtung nach einem der vorhergehenden Ansprüche, wobei die Chemikalie ausgewählt ist unter Oxalsäure, Natriumchlorid, Paraffinwachs und Acetamid.

6. Einrichtung nach Anspruch 1, wobei die Chemikalie vom Charakter her ungiftig, nicht korrosiv, nichtleitend, nicht induktiv und nicht entzündbar ist.

7. Einrichtung nach einem der vorhergehenden Ansprüche, wobei die Chemikalie im festen Zustand gegenüber Licht undurchsichtig ist und einen festen Wert optischer Ausgabe emittiert und die Chemikalie mit zunehmender Temperatur schmilzt und transparent wird, wodurch eine erhöhte optische Ausgabe erzeugt wird.

8. Einrichtung nach einem der vorhergehenden Ansprüche, wobei die Phasenumwandlung am Schmelzpunkt der Chemikalie die optische Ausgabe erhöht, die als ein Detektorsignal zur Betätigung eines Alarms oder Relais verwendet wird.

9. Einrichtung nach einem der vorhergehenden Ansprüche, wobei die reflektierende Beschichtung auf der äußeren Oberfläche der Zelle eine Aluminiumbeschichtung ist.

10. Einrichtung nach einem der vorhergehenden Ansprüche, wobei die Ausbreitung des optischen Signals sicher ist und ohne jegliche Nebensprech- oder Interferenzprobleme abläuft.

11. Einrichtung nach einem der vorhergehenden Ansprüche, wobei das optische Signal durch die Anwesenheit elektrischer Signale nicht beeinflußt wird.

12. Einrichtung nach einem der vorhergehenden Ansprüche, wobei die Sonde für die Fernerfassung von Temperatur bis zu einer Entfernung von 1 km verwendet wird.

13. Einrichtung nach einem der vorhergehenden Ansprüche, wobei die Sonde bei einer erhöhten Temperatur eine Erhöhung um das sechsfache im Ausgangssignal gegenüber dem Signal bei Raumtemperatur liefert.

14. Einrichtung nach einem der vorhergehenden Ansprüche, wobei die optische Sonde bei der Schmelztemperatur der Chemikalie arbeitet, die im Bereich von 75-85°C liegt.

15. Einrichtung nach einem der vorhergehenden Ansprüche, wobei die optische Sonde beim Überwachen von Temperatur in aggressiven, entzündbaren, korrosiven und elektromagnetisch verrauschten Umgebungen verwendet wird.

16. Verfahren zum Erfassen von Temperatur durch Intensitätsmodulation eines Lichtsignals unter Verwendung einer Einrichtung wie in Anspruch 1 beansprucht, wobei das Verfahren die folgenden Schritte umfaßt:
(a) Eintauchen der Sonde in einen Flüssigkeitsbehälter mit einer Temperatur unter dem Schmelzpunkt der Chemikalie;
(b) Leiten des Lichts von der Weißlichtquelle zu dem Photodetektor;
(c) Aufzeichnen eines festen Werts eines optischen Signals, das von der Chemikalie im festen Zustand erzeugt wird, die in der evakuierten Zelle vorliegt, um einen konkaven Spiegel mit einer Brennweite gleich der Hälfte der Zelle bei Raumtemperatur zu erhalten und
(d) Detektieren des von der Chemikalie bei ihrem Schmelzpunkt und in der flüssigen Phase erzeugten maximalen optischen Signals;
(e) Detektieren des optischen Signals mit Hilfe eines Photodetektors;
(f) Signalverarbeitung mit Hilfe einer Elektronikschaltungsanordnung und
(g) Ermöglichen einer Aktivierung eines Relais, um den Erwärmungsprozeß zu stoppen oder einen Alarm auszulösen.

17. Verfahren nach Anspruch 16, wobei das Leiten von Licht von der Lichtquelle zu dem Detektor die Transmission von Licht durch den Quellenarm, Reflexion von der Oberfläche der in der Zelle enthaltenen Chemikalie und Bewegung der reflektierten optischen Welle durch den Detektorarm zu dem Detektor umfaßt.

18. Verfahren nach Anspruch 16, wobei die Flüssigkeit ausgewählt ist aus der Gruppe bestehend aus Wasser, Aceton, Kohlenstofftetrachlorid und Transformatoröl.

19. Verfahren nach einem der Ansprüche 16 oder 17, wobei die Chemikalie ausgewählt ist unter Oxalsäure, Natriumchlorid, Paraffinwachs und Acetamid.

20. Verfahren nach einem der Ansprüche 16 bis 18, wobei die Chemikalie einen Schmelzpunkt im Bereich von 75-85°C aufweist.

21. Verfahren nach einem der Ansprüche 16 bis 19, wobei die Ausbreitung des optischen Signals sicher ist und ohne jegliche Nebensprech- oder Interferenzprobleme abläuft.

22. Verfahren nach einem der Ansprüche 16 bis 20, wobei das optische Signal durch die Anwesenheit elektrischer Signale nicht beeinflußt wird.

23. Verfahren nach einem der Ansprüche 16 bis 21, wobei die Sonde für die Fernerfassung von Temperatur bis zu einer Entfernung von 1 km verwendet wird.

24. Verfahren nach einem der Ansprüche 16 bis 22, wobei die Sonde bei einer erhöhten Temperatur eine Erhöhung um das sechsfache im Ausgangssignal gegenüber dem Signal bei Raumtemperatur liefert.

25. Verfahren nach einem der Ansprüche 16 bis 23, wobei die chemische Substanz, die bei Raumtemperatur undurchsichtig ist, bei einer gegebenen höheren Temperatur transparent wird, was eine Betätigung eines Relais zum Stoppen des Erwärmungsprozesses oder Auslösen eines Alarms ermöglicht.

## Revendications

1. Sonde à immersion de commutation par température à fibres optiques et à modulation d'intensité pour la détection à distance de la température, ledit dispositif comprenant :
(a) un guide optique de faisceau de fibres optiques en forme de Y entouré d'une gaine métallique résistante à l'écrasement (8) terminée par un chapeau d'extrémité métallique (1) ;
(b) ce guide en Y ayant un bras source (2), un bras détecteur (10), un raccord en Y (3), un bras commun (9) et un chapeau d'extrémité commun (4) ;
(c) une source de lumière blanche est couplée au bras source ;
(d) un photodétecteur est aligné avec le bras détecteur ;
(e) le guide en Y étant monté dans le chapeau d'extrémité commun (4) de la gaine métallique ;
(f) une cellule sous vide (6) comportant une surface concave inférieure et contenant un produit chimique, qui est attachée à l'extrémité commune du guide en Y comme un moyen pour détecter la température ; et
(g) **caractérisée en ce que** la surface concave inférieure de la cellule est pourvue d'un revêtement réflecteur sur une surface extérieure pour former un miroir concave ayant une longueur focale égale à environ la moitié de la longueur de la cellule.

2. Le dispositif selon la revendication 1, la fibre optique étant faite d'un matériau diélectrique qui est non corrosif, durable et résistant à toute interférence électromagnétique (EMI) et à tout brouillage radioélectrique (EFI).

3. Le dispositif selon l'une quelconque des revendications 1 ou 2, le bras détecteur qui est couplé à un photodétecteur étant connecté à des circuits électroniques de traitement de signal et à un affichage de sortie.

4. Le dispositif selon l'une quelconque des revendications précédentes, le produit chimique utilisé subissant une transition de phase de la phase solide à la phase liquide à son point de fusion.

5. Le dispositif selon l'une quelconque des revendications précédentes, le produit chimique étant sélectionné parmi l'acide oxalique, le chlorure de sodium, la paraffine et l'acétamide.

6. Le dispositif selon la revendication 1, le produit chimique étant de nature non toxique, non corrosive, non conductrice et non inductive et ininflammable.

7. Le dispositif selon l'une quelconque des revendications précédentes, le produit chimique à l'état solide étant opaque à la lumière et émettant une valeur fixe de sortie optique et, à la température plus élevée, le produit chimique fondant et devenant transparent, produisant ainsi une sortie optique plus grande.

8. Le dispositif selon l'une quelconque des revendications précédentes, la transition de phase au point de fusion du produit chimique augmentant la sortie optique qui est utilisée comme un signal de détecteur pour l'actionnement d'une alarme ou d'un relais.

9. Le dispositif selon l'une quelconque des revendications précédentes, ledit revêtement réflecteur sur la surface extérieure de la cellule étant un revêtement en aluminium.

10. Le dispositif selon l'une quelconque des revendications précédentes, la propagation du signal optique étant sûre et sans problèmes de diaphonie ou d'interférence.

11. Le dispositif selon l'une quelconque des revendications précédentes, le signal optique n'étant pas affecté par la présence de signaux électriques.

12. Le dispositif selon l'une quelconque des revendications précédentes, ladite sonde étant utilisée pour la détection à distance de la température à une distance allant jusqu'à 1 km.

13. Le dispositif selon l'une quelconque des revendications précédentes, ladite sonde à une température plus élevée fournissant une augmentation sextuple dans le signal de sortie par rapport au signal à la température ambiante.

14. Le dispositif selon l'une quelconque des revendications précédentes, ladite sonde optique fonctionnant à la température de fusion du produit chimique qui est située dans la plage de 75 à 85 °C.

15. Le dispositif selon l'une quelconque des revendications précédentes, ladite sonde optique étant utilisée pour surveiller la température dans des environnements hostiles, inflammables, corrosifs et bruyants électromagnétiquement.

16. Procédé de détection de la température par modulation d'intensité de signal lumineux en utilisant un dispositif tel que revendiqué dans la revendication 1, ledit procédé comprenant les étapes consistant à :
(a) immerger la sonde dans un récipient de liquide ayant une température en dessous du point de fusion du produit chimique ;
(b) faire passer la lumière de la source de lumière blanche au photodétecteur ;
(c) enregistrer une valeur fixe ou un signal optique produits par le produit chimique à l'état solide présent dans la cellule sous vide afin d'obtenir un miroir concave avec une longueur focale égale à la moitié de la longueur focale de la cellule à la température ambiante ; et
(d) détecter le signal optique maximum produit par le produit chimique à son point de fusion et dans la phase liquide ;
(e) détecter le signal optique au moyen d'un photodétecteur ;
(f) traiter le signal au moyen de circuits électroniques ; et
(g) permettre l'actionnement d'un relais pour arrêter le processus de chauffage ou déclencher une alarme.

17. Le procédé tel que revendiqué dans la revendication 16, le passage de lumière de la source de lumière au détecteur comprenant la transmission de la lumière à travers le bras source, la réflexion par la surface du produit chimique contenu dans la cellule et le mouvement de l'onde optique réfléchie à travers le bras détecteur jusqu'au détecteur.

18. Le procédé selon la revendication 16, le liquide étant sélectionné parmi le groupe comprenant l'eau, l'acétone, le tétrachlorure de carbone et l'huile pour transformateur.

19. Le procédé selon l'une quelconque des revendications 16 ou 17, le produit chimique étant sélectionné parmi l'acide oxalique, le chlorure de sodium, la paraffine et l'acétamide.

20. Le procédé selon l'une quelconque des revendications 16 à 18, le produit chimique ayant un point de fusion situé dans la plage de 75 à 85 °C.

21. Le procédé selon l'une quelconque des revendications 16 à 19, la propagation du signal optique étant sûre et sans problèmes de diaphonie ou d'interférence.

22. Le procédé selon l'une quelconque des revendications 16 à 20, le signal optique n'étant pas affecté par la présence de signaux électriques.

23. Le procédé selon l'une quelconque des revendications 16 à 21, ladite sonde étant utilisée pour la détection à distance jusqu'à une distance de 1 km.

24. Le procédé selon l'une quelconque des revendications 16 à 22, ladite sonde à une température plus élevée fournissant une augmentation sextuple dans le signal de sortie par rapport au signal à la température ambiante.

25. Le procédé selon l'une quelconque des revendications 16 à 23, la substance chimique qui est opaque à la température ambiante devenant transparente à une température plus élevée donnée, permettant l'actionnement d'un relais pour arrêter le processus de chauffage ou déclencher une alarme.
